(19) Europäisches Patentamt / European Patent Office / Office européen des brevets

(11) **EP 4 059 465 B1**

(12) **EUROPEAN PATENT SPECIFICATION**

(45) Date of publication and mention
of the grant of the patent:
**10.04.2024 Bulletin 2024/15**

(21) Application number: **20909363.2**

(22) Date of filing: **10.10.2020**

(51) International Patent Classification (IPC):
**A61C 7/10** (2006.01)   **A61C 7/00** (2006.01)
**A61C 7/08** (2006.01)

(52) Cooperative Patent Classification (CPC):
**A61C 7/10; A61C 7/002; A61C 7/08**

(86) International application number:
**PCT/CN2020/120200**

(87) International publication number:
**WO 2021/135488 (08.07.2021 Gazette 2021/27)**

(54) **DENTAL ORTHODONTIC APPLIANCE AND DESIGN METHOD AND MANUFACTURING METHOD THEREFOR**

KIEFERORTHOPÄDISCHE VORRICHTUNG SOWIE ENTWURFSVERFAHREN UND HERSTELLUNGSVERFAHREN DAFÜR

APPAREIL ORTHODONTIQUE DENTAIRE ET PROCÉDÉ DE CONCEPTION ET PROCÉDÉ DE FABRICATION ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2019 CN 201911422575**
**31.12.2019 CN 201922484327 U**

(43) Date of publication of application:
**21.09.2022 Bulletin 2022/38**

(73) Proprietors:
• **Shanghai Smartee Denti-Technology Co., Ltd.**
**Shanghai 201210 (CN)**
• **Taikang Bybo Dental Group Co., Ltd.**
**Zhuhai, Guangdong 519031 (CN)**
• **Shen, Gang**
**Shanghai 200001 (CN)**

(72) Inventors:
• **WEI, Tingting**
**Shanghai 200001 (CN)**
• **WANG, Te**
**Shanghai 200001 (CN)**
• **JIANG, Jianyu**
**Shanghai 200001 (CN)**
• **XU, Ziqing**
**Shanghai 200001 (CN)**
• **GUO, Tao**
**Shanghai 200001 (CN)**
• **WANG, Xingxing**
**Shanghai 200120 (CN)**
• **YANG, Sensen**
**Shanghai 200120 (CN)**
• **ZHUANG, Huimin**
**Shanghai 200120 (CN)**
• **WU, Gang**
**Shanghai 200120 (CN)**
• **SHEN, Gang**
**Shanghai 200001 (CN)**

(74) Representative: **Novagraaf International SA**
**Chemin de l'Echo 3**
**1213 Onex, Geneva (CH)**

(56) References cited:
WO-A1-2019/069163   CN-A- 106 714 726
CN-A- 106 714 726   CN-A- 107 847 299
CN-A- 107 898 513   CN-A- 111 067 644
CN-U- 206 867 292   CN-U- 209 678 717
US-A1- 2018 055 602

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## TECHNIC FIELD

The present disclosure relates to the technical field of medical devices, and in particular, to a dental orthodontic appliance and a design method and manufacturing method thereof.

## BACKGROUND

Crowded teeth crowding are a common clinical manifestation in orthodontist's patients. At present, commonly used orthodontic designs include tooth extractions, interproximal enamel reduction, and distal movement of molars or labially inclined teeth to provide space. However, in some patients, crowded teeth are mainly manifested by an insufficient width of a dental arch. After the width of the dental arch is opened, the crowded teeth will be improved. Arch expansion therapy is a common orthodontic method for the arch width deficiency. Common arch expansion methods include arch expansion with a fixed expander, quad-helix expansion, knight arch expansion, implant-assisted expansion, and surgery-assisted expansion, etc. Invisible orthodontic appliances also have certain ability for arch expansion. Previous studies have shown that a combination of a spiral expansion spring and the invisible orthodontic appliance to perform arch expansion has also achieved good results.

However, most of the above orthodontic methods are fixed orthodontic treatment methods, which not only cause great damage to a patient's oral cavity, but also make the patient's experience and comfort poor. In addition, when performing the above-mentioned orthodontic operation, it is necessary to insert a wrench into a small hole of an internal device to perform arch expansion operation, which greatly increases inconvenience of arch expansion for the patient, and it is also easy to drop the small wrench into the mouth during operation, causing risks such as airway obstruction, etc. The conventional quad-helix expander often causes discomfort to the patient because its metal parts easily compress mucosa. Invisible orthodontic appliances are chosen by more and more people because they are comfortable to wear, removable and beautiful. The invisible orthodontic appliance itself also has effect of arch expansion at some extent, but the effect of arch expansion is poor due to a small arch expansion force, and an arch expansion period is prolonged because molars are subjected to arch expansion in order. Therefore, it is an urgent problem to be solved how to combine the conventional orthodontic effect with the invisible orthodontic appliance to achieve the same or better orthodontic effect, or how to improve a structure of the invisible orthodontic appliance to achieve the same or better orthodontic effect. WO2019/069163A1 describes various orthodontic palatal expanders having split-beams that cause natural expansion in a horizontal plane as the beams relax from initial deflected states, and by including the split-beams, the orthodontic palatal expander described can facilitate more precise control of rotational forces applied to shells during expansion of orthodontic palatal expander.

Therefore, it is necessary to develop a new type of dental orthodontic appliance to solve the above-mentioned problems.

## SUMMARY

Some embodiments of the present disclosure provide a dental orthodontic appliance, a design method and a manufacturing method thereof, a dental appliance set and a dental orthodontic system. An upper palatal arch of the dental orthodontic appliance may induce buccolingual lateral amplification of maxillary palatal suture bone deposition by means of deformation, so that teeth in posterior regions can move laterally buccolingually under an action of a shell-like body of the dental orthodontic appliance. The invention is set out in the appended set of claims.

In a first aspect, an embodiment of the present disclosure provides a dental orthodontic appliance, including the shell-like body. The shell-like body is provided with a plurality of cavities for accommodating maxillary teeth, and the shell-like body is further provided with an upper palatal arch to reshape a form of a dental arch. Two ends of the upper palatal arch are respectively and partially connected to positions of gingival margins or positions adjacent to the gingival margins on ligual sides in posterior regions on left and right sides of the shell-like body. When the shell-like body interacts with teeth, the upper palatal arch induces the buccolingual lateral expansion of the maxillary palatal suture bone deposition by means of deformation, and the teeth in the posterior regions move laterally buccolingually under the action of the shell-like body.

In an embodiment of the present disclosure, a lingual spacing between the posterior regions on the left and right sides of the shell-like body is different from a lingual spacing between teeth corresponding to the posterior regions on the left and right sides.

In an embodiment of the present disclosure, the upper palatal arch is further provided with a reinforcing part for enhancing expansion or contraction of the upper palatal arch. Optionally, the reinforcing part is at least one reinforcing ridge provided on the upper palatal arch and consistent with or different from a curvature of the palate.

In an embodiment of the present disclosure, a ridge height of the reinforcing ridge is proportional to a flexural section factor.

In an embodiment of the present disclosure, a section of a cross section of the reinforcing ridge along a mesial-distal direction of a sagittal plane is a discontinuous section or a continuous section.

In an embodiment of the present disclosure, a section of a cross section of the reinforcing ridge in the mesial-distal direction is provided above and below a cross section of the upper palatal arch, is provided above the cross section of the upper palatal arch, or is provided below the cross section of the upper palatal arch.

In an embodiment of the present disclosure, a section of a cross section of the reinforcing ridge in the mesial-distal direction is an arc or a semi-closed polygon.

In an embodiment of the present disclosure, a rigidity of the upper palatal arch is greater than a rigidity of an area of the shell-like body for accommodating the maxillary teeth; and/or, the upper palatal arch and the shell-like body is different in at least one of thickness, hardness, material and number of layers.

In an embodiment of the present disclosure, at least a part of the upper palatal arch is a multi-layer structure; optionally, a reinforcing archwire is provided between two adjacent layers of the multi-layer structure.

In an embodiment of the present disclosure, the upper palatal arch includes a palatal surface and a lingual surface, and a distance between the palatal surface and the palate is 1-2 mm.

In an embodiment of the present disclosure, the upper palatal arch is further provided with an adjustment part for adjusting expansion or contraction of the upper palatal arch; optionally, the adjustment part is an elastic telescopic structure, and a telescopic direction of the elastic telescopic structure is a buccolingual direction.

In an embodiment of the present disclosure, the upper palatal arch and the shell-like body are formed into an integrated structure.

In an embodiment of the present disclosure, the upper palatal arch is further provided with magnets that expand or contract in the buccolingual direction and have opposite magnetic properties.

In a second aspect, an embodiment of the present disclosure provides a dental appliance set, including a first shell-like dental appliance for an upper jaw and a second shell-like dental appliance for a lower jaw. The first shell-like dental appliance is the dental orthodontic appliance described in the first aspect, the shell-like body of the second shell-like dental appliance is provided with a plurality of cavities for accommodating mandibular teeth.

In a third aspect, an embodiment of the present disclosure provides a dental orthodontic system, including a plurality of dental appliance sets. The plurality of dental appliance sets include at least one of the dental appliance sets described in the second aspect herein. The plurality of dental appliance sets has a geometric shape that enables the teeth to be gradually repositioned from an initial position to a target orthodontic position. Optionally, the upper palatal arch in the plurality of dental appliance sets has different curvatures in different orthodontic stages. Optionally, the upper palatal arch in the dental appliance set is also provided with a reinforcing part for enhancing expansion or contraction of the upper palatal arch. Optionally, the reinforcing part is at least one reinforcing ridge provided on the upper palatal arch and consistent with or different from a curvature of the palate, and a ridge height of the reinforcing ridge is proportional to a flexural section factor.

In an embodiment of the present disclosure, as an orthodontic process progresses, ridge heights of the reinforcing ridges in different dental appliance sets gradually decrease.

In a fourth aspect, an embodiment of the present disclosure provides a designing method of a dental orthodontic appliance, including:

obtaining an initial dental digital model, here the initial dental digital model includes a palate digital model;

designing an upper palatal arch digital model with characteristic information based on the initial dental digital model, here the characteristic information includes size information and preset position information of the upper palatal arch digital model, and the preset position information of the upper palatal arch is that the two ends of the upper palatal arch are provided at positions of lingual gingival margins or positions adjacent to the lingual gingival margins of posterior regions of the initial dental digital model;

generating a dental digital model with the upper palatal arch digital model based on the initial dental digital model and the upper palatal arch digital model with the characteristic information;

designing the dental orthodontic appliance based on the dental digital model with the upper palatal arch digital model, so that the dental orthodontic appliance includes a shell-like body with a plurality of cavities for accommodating maxillary teeth, and an upper palatal arch connected to positions of lingual gingival margins or positions adjacent to the lingual gingival margins of posterior regions on left and right sides of the dental orthodontic appliance;

when the shell-like body interacts with teeth, the upper palatal arch induces buccolingual lateral amplification of maxillary palatal suture bone deposition by means of deformation, and teeth in the posterior regions move laterally buccolingually under an action of the shell-like body.

In a fifth aspect, an embodiment of the present disclosure provides a manufacturing method of a dental orthodontic appliance. The manufacturing method is to manufacture a dental orthodontic appliance based on the design method of the dental orthodontic appliance described in the fourth aspect. The manufacturing method includes thermoforming or direct 3D printing.

The dental orthodontic appliance and the design method and manufacturing method thereof, the dental appliance set and the dental orthodontic system provided by the present disclosure have at least following beneficial effects. By providing the upper palatal arch to reshape the form of the dental arch at the positions of the lingual gingival margins or positions adjacent to the lingual gingival margins of the posterior regions on the left and right sides of the shell-like body, when the shell-like body interacts with the teeth, the upper palatal arch can induce the buccolingual lateral expansion of the maxillary palatal suture bone deposition by means of deformation, the teeth in the posterior regions move laterally buccolingually under the action of the shell-like body, and the upper palatal arch can increase or decrease a distance of the teeth in the posterior region in the buccolingual direction. The combination of the upper palatal arch and the invisible orthodontic appliance not only makes it easy and comfortable for the patient to wear, but also has a corresponding orthodontic effect. The dental appliance set includes a maxillary dental orthodontic appliance and a mandibular dental orthodontic appliance, respectively accommodating the maxillary teeth and the mandibular teeth, and capable of aligning upper and lower teeth at the same time. The dental orthodontic system includes a series of dental appliance sets which can not only adjust the dental arch, but also correct the teeth, so that the teeth can move from the initial position to the target position.

## BRIEF DESCRIPTION OF THE DRAWINGS

FIG. 1a is a schematic structural diagram of a first dental orthodontic appliance according to Embodiment 1 of the present disclosure.
FIG. 1b is a schematic structural diagram of a first dental orthodontic appliance according to Embodiment 1 of the present disclosure along a direction A shown in FIG. 1a.
FIG. 2 is a schematic diagram illustrating a distance between a first upper palatal arch and the palate of a user after the user wears the first dental orthodontic appliance shown in FIG. 1a.
FIG. 3 is a schematic structural diagram of a second dental orthodontic appliance according to Embodiment 2 of the present disclosure.
FIG. 4a is a schematic diagram of a section along a mesial-distal direction in a structure composed of three arc-shaped reinforcing ridges and a first upper palatal arch according to Embodiment 2 of the present disclosure.
FIG. 4b is a schematic diagram of a section along a mesial-distal direction in a structure composed of three arc-shaped reinforcing ridges and a first upper palatal arch according to Embodiment 3 of the present disclosure.
FIG. 4c is a schematic diagram of a section along a mesial-distal direction in a structure composed of a continuous reinforcing ridge and a first upper palatal arch according to Embodiment 4 of the present disclosure along the mesial-distal direction.
FIG. 5a is a schematic structural diagram of a third dental orthodontic appliance according to Embodiment 5 of the present disclosure.
FIG. 5b is a schematic structural diagram of a crescent-like reinforcing ridge shown in FIG. 5a.
FIG. 6 is a schematic structural diagram of a fourth dental orthodontic appliance according to Embodiment 6 of the present disclosure.
FIG. 7 is a schematic structural diagram of a fifth dental orthodontic appliance according to Embodiment 7 of the present disclosure.
FIG. 8 is a schematic structural diagram of a sixth dental orthodontic appliance according to Embodiment 8 of the application.
FIG. 9 is a schematic structural diagram of a seventh dental orthodontic appliance according to Embodiment 9 of the present disclosure.
FIG. 10 is a flowchart of a design method of a dental orthodontic appliance according to an embodiment of the present disclosure.

## DETAILED DESCRIPTION OF THE EMBODIMENTS

In order to make the purpose, technical solutions and advantages of the present disclosure clearer, the technical solutions in the embodiments of the present disclosure will be clearly and completely described below with reference to the accompanying drawings of the present disclosure. Obviously, the described embodiments are merely some embodiments of the present disclosure, but not all embodiments. Based on the embodiments in the present disclosure, all other embodiments obtained by those of ordinary skill in the art without inventive work fall within the protection scope of the present disclosure. Unless otherwise defined, technical or scientific terms used herein shall have ordinary meanings as understood by those of ordinary skills in the field to which the present disclosure belongs. As used herein, "comprising", "including" and similar words mean that the elements or things appearing before the word encompass the elements or things recited after the word and their equivalents, but do not exclude other elements or things.

In view of the problems existing in existing technologies, an embodiment of the present disclosure provides a dental orthodontic appliance, including a shell-like body and an upper palatal arch. The upper palatal arch is used to reshape a form of a dental arch, and the shell-like body is used to accommodate a user's maxillary teeth.

A "posterior region" mentioned in the embodiments herein is defined according to a classification of teeth in the 2nd edition of "Introduction of Stomatology" published by the Peking University Medical Press on pages 36 to 38, and includes premolars and molars, that is, teeth 4 to 8 as indicated by using a foreign direct investment (FDI) marking method.

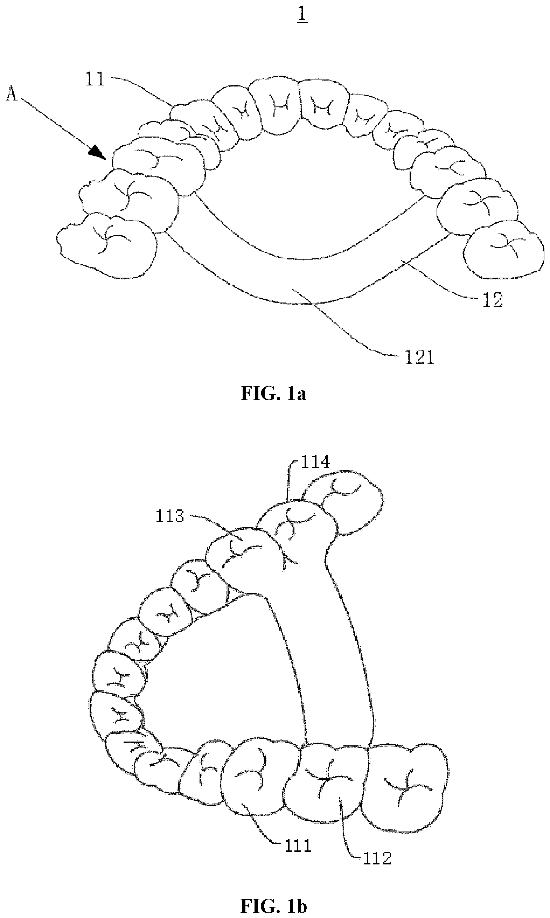

FIG. 1a is a schematic structural diagram of a first dental orthodontic appliance according to Embodiment 1 of the present disclosure. FIG. 1b is a schematic structural diagram of the first dental orthodontic appliance along a direction A shown in FIG. 1a.

In an embodiment of the present disclosure, two ends of the upper palatal arch are respectively and partially connected to positions of lingual gingival margins or positions adjacent to the lingual gingival margins of posterior regions on left and right sides of the shell-like body. Referring to FIG. 1a and FIG. 1b, the first dental orthodontic appliance 1 has a first shell-like body 11 and a first upper palatal arch 12. The first shell-like body 11 is used for accommodating the maxillary teeth of the user, and one end of the first upper palatal arch 12 is partially connected to positions of lingual gingival margins corresponding to a second premolar 111 and a first molar 112 on a right side of the first shell-like body 11, and the other end is partially connected to positions of the lingual gingival margins corresponding to a second premolar 113 and a first molar 114 on a left side of the first shell-like body 11.

In an embodiment of the present disclosure, the first shell-like body 11 and the first upper palatal arch 12 are integrally formed. In another embodiment of the present disclosure, the first shell-like body 11 and the first upper palatal arch 12 are formed separately, and then the first upper palatal arch 12 is fixedly connected to the first shell-like body 11.

In an embodiment of the present disclosure, two ends of the first upper palatal arch 12 are respectively and partially connected to positions of lingual gingival margins of posterior regions on left and right sides of the first shell-like body 11. Specifically, the upper palatal arch 12 is extended and connected along the lingual gingival margins of the posterior regions on the left and right sides of the first shell-like body 11.

In an embodiment of the present disclosure, two ends of the first upper palatal arch 12 are respectively and partially connected to positions adjacent to the lingual gingival margins of the posterior regions on the left and right sides of the first shell-like body 11. Specifically, the first upper palatal arch 12 is extended and connected along lingual dental crowns of the posterior regions on the left and right sides of the first shell-like body 11, and a connection between the first upper palatal arch 12 and the first shell-like body 11 is not at the positions of the lingual gingival margins.

In a specific embodiment of the present disclosure, one end of the first upper palatal arch 12 is partially connected to positions of lingual gingival margins or positions adjacent to the lingual gingival margins corresponding to any one or more teeth in the posterior region on the left side of the first shell-like body 11. The other end of the first upper palatal arch 12 is partially connected to positions of lingual gingival margins or positions adjacent to the lingual gingival margins corresponding to any one or more teeth in the posterior region on the right side of the first shell-like body 11. The plurality of teeth described here may be at least two teeth arranged in sequence, or at least two teeth arranged discontinuously. When the plurality of teeth described here is at least two teeth arranged discontinuously, there are at least two the first upper palatal arch 12.

In a specific embodiment of the present disclosure, junctions between the two ends of the first upper palatal arch 12 and lingual sides of the posterior regions on the left and right sides of the first shell-like body 11 are symmetrical to a dental midline of the first shell-like body 11.

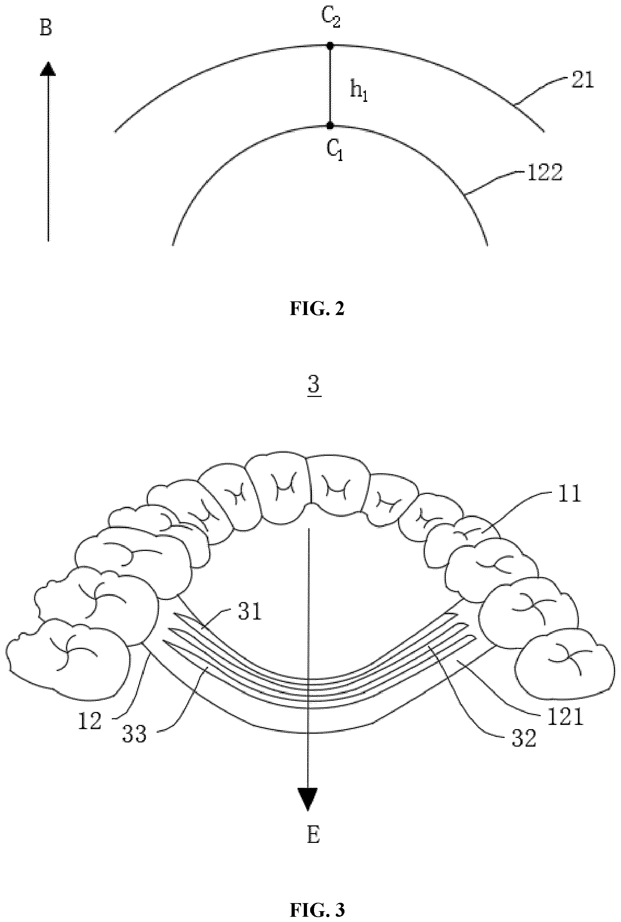

FIG. 2 is a schematic diagram illustrating a distance between a first upper palatal arch and the palate of the user after the user wears the first dental orthodontic appliance shown in FIG. 1a.

Referring to FIG. 1a and FIG. 2, the first upper palatal arch 12 includes a lingual surface 121 and a palatal surface 122. After the user wears the first shell-like body 11, the lingual surface 121 faces the user's tongue (not shown in the figure), the palatal surface 122 faces the palate 21 of the user.

In an embodiment of the present disclosure, referring to FIG. 2, any point on a surface of the palatal surface 122, such as C1, extends along a B direction until intersecting with a surface of the palate 21 facing the palatal surface 122 at C2. A distance between the palatal surface 122 and the palate 21 is a distance h1 between C1 and C2. Specifically, h1 is 1-2 mm, the B direction is a direction perpendicular to a tangent plane at the point C 1.

After the user wears the first shell-like body 11, the first shell-like body 11 interacts with the user's teeth, and the first upper palatal arch 12 may induce maxillary palatine suture bone deposition by means of deformation, and a direction of the maxillary palatine suture bone deposition is a buccolingual direction. The teeth in the posterior region, under an action of the first shell-like body 11, make teeth accommodated in the first shell-like body 11 move laterally buccolingually, so that the first upper palatal arch 12 may reshape a form of the dental arch.

In an embodiment of the present disclosure, a lingual spacing between the posterior regions on the left and right sides of the first shell-like body 11 is different from a lingual spacing between teeth corresponding to the posterior regions on the left and right sides. The teeth corresponding to the posterior regions on the left and right sides refer to teeth respectively accommodated in cavities of the posterior regions on the left and right sides of the first shell-like body 11 after the user wears the first shell-like body 11.

When the lingual spacing between the posterior regions on the left and right sides of the first shell-like body 11 is greater than the lingual spacing between teeth corresponding the posterior regions on the left and right sides, and the first shell-like body 11 interacts with the user's teeth at the same time, the first upper palatal arch 12 can play a role of arch expansion.

When the lingual spacing between the posterior regions on the left and right sides of the first shell-like body 11 is smaller than the lingual spacing between the teeth corresponding to the posterior regions on the left and right sides, and the first shell-like body 11 interacts with the user's teeth at the same time, the first upper palatal arch 12 can play a role of arch contraction.

In an embodiment of the present disclosure, the first upper palatal arch 12 is different from the first shell-like body 11 in at least one of thickness, hardness, material, and number of layers, so that a rigidity of the first upper palatal arch 12 is greater than a rigidity of an area of the first shell-like body 11 for accommodating the user's maxillary teeth, thereby the first upper palatal arch 12 may generate sufficient force on the first shell-like body 11 to generate the effect of arch expansion and arch contraction.

FIG. 3 is a schematic structural diagram of a second dental orthodontic appliance according to Embodiment 2 of the present disclosure.

In an embodiment of the present disclosure, the upper palatal arch is provided with a reinforcing part for enhancing expansion or contraction of the upper palatal arch. The reinforcing part is at least one reinforcing ridge provided on the palate arch and is consistent with or different from a curvature of the upper palate. A section of the reinforcing ridge along a mesial-distal direction of a sagittal plane is a discontinuous section or a continuous section. When the section of the reinforcing ridge along the mesial-distal direction of the sagittal plane is a continuous section, the reinforcing ridge may generate sufficient force to achieve effect of arch expansion or arch contraction.

Referring to FIG. 3, a main difference between a second dental orthodontic appliance 3 and the first dental orthodontic appliance 1 of Embodiment 1 is that: in the second dental orthodontic appliance 3, the first upper palatal arch 12 is provided with a first reinforcing part along a mesial-distal direction, namely a first arc-shaped reinforcing ridge 31, a second arc-shaped reinforcing ridge 32 and a third arc-shaped reinforcing ridge 33 arranged in sequence along an E direction. From any point at a junction of one end of the first upper palatal arch 12 and the first shell-like body 11 and along a surface of the upper palatal arch 12 where each of the arc-shaped reinforcing ridges is located, an arrangement direction of each of the arc-shaped reinforcing ridges points to any point at a junction of the other end of the first upper palatal arch 12 and the first shell-like body 11.

Referring to FIG. 3, the first arc-shaped reinforcing ridge 31, the second arc-shaped reinforcing ridge 32 and the third arc-shaped reinforcing ridge 33 are all located on the palatal surface 122 of the first upper palatal arch 12, and are integrally formed with the first upper palatal arch 12 to facilitate manufacture. Specifically, the second dental orthodontic appliance 3 may be manufactured by thermoforming or direct 3D printing. When thermoforming is used, a corresponding model may be directly 3D printed, then manufactured by lamination, and then cut to obtain a required dental appliance.

In an embodiment of the present disclosure, the first arc-shaped reinforcing ridge 31, the second arc-shaped reinforcing ridge 32 and the third arc-shaped reinforcing ridge 33 are respectively formed or integrally formed and then fixedly connected to the first upper palatal arch 12.

When the section of the reinforcing ridge along the mesial-distal direction of the sagittal plane is a discontinuous section, the reinforcing ridge is provided on the palatal surface of the upper palatal arch, and a part of the reinforcing ridge is in contact with the upper palate of the user. Specifically, the first arc-shaped reinforcing ridge 31, the second arc-shaped reinforcing ridge 32 and the third arc-shaped reinforcing ridge 33 are provided on the palatal surface 122, and a part of one or more of the first arc-shaped reinforcing ridge 31, the second arc-shaped reinforcing ridge 32 and the third arc-shaped reinforcing ridge 33 are in contact with the upper palate of the user. Areas in contact with the palate of the user are a plurality of discontinuous areas to minimize irritation to the user's palate and enhance wearing experience.

In an embodiment of the present disclosure, a section of a cross section of the reinforcing ridge in the mesial-distal direction is provided above and below a cross section of the upper palatal arch, is provided above the cross section of the upper palatal arch, or is provided below the cross section of the upper palatal arch. More specifically, the section of the cross section of the reinforcing ridge in the mesial-distal direction is a sine-shaped section provided above and below the cross section of the upper palatal arch. The reinforcing ridge is provided above the cross section of the upper palatal arch or is provided below the cross section of the upper palatal arch, that is, only is a reinforcing ridge provided on one side, an upper side or a lower side.

In an embodiment of the present disclosure, the section of the cross section of the single reinforcing ridge in the mesial-distal direction is an arc or a semi-closed polygon. More specifically, a shape of the section is any one or more of zigzag, wave, ellipse and rectangular arc.

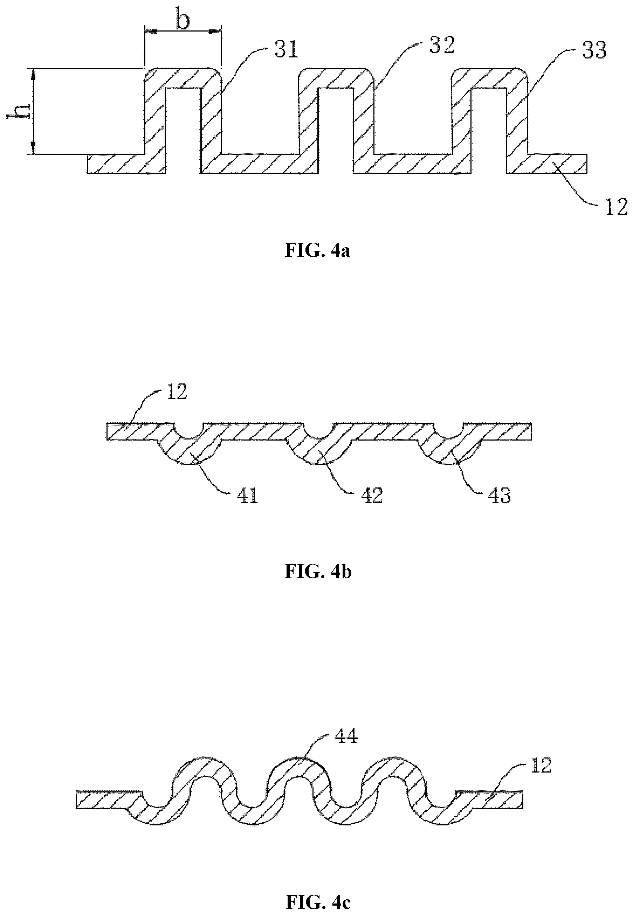

FIG. 4a is a schematic diagram of a section along the mesial-distal direction in a structure composed of three arc-shaped reinforcing ridges and a first upper palatal arch according to Embodiment 2 of the present disclosure. FIG. 4b is a schematic diagram of a section along the mesial-distal direction in a structure composed of three arc-shaped reinforcing ridges and a first upper palatal arch according to Embodiment 3 of the present disclosure. FIG. 4c is a schematic diagram of a section along the mesial-distal direction in the structure composed of the continuous reinforcing ridge and the first upper palatal arch according to Embodiment 4 of the present disclosure.

Referring to FIG. 4a, the section of a first reinforcing part formed by the first arc-shaped reinforcing ridge 31, the second arc-shaped reinforcing ridge 32 and the third arc-shaped reinforcing ridge 33 along the mesial-distal direction is a discontinuous section. A shape of the discontinuous section is a semi-closed rounded rectangle. The first arc-shaped reinforcing ridge 31, the second arc-shaped reinforcing ridge 32 and the third arc-shaped reinforcing ridge 33 are all provided above the cross section of the first upper palatal arch 12 and are all reinforcing ridges provided on one side, convex directions of which are from a lingual side to a palatal side.

Referring to FIG. 3 and FIG. 4b, an arrangement of a fourth arc-shaped reinforcing ridge 41, a fifth arc-shaped reinforcing ridge 42 and a sixth arc-shaped reinforcing ridge 43 along the buccolingual direction is basically the same as that of the first arc-shaped reinforcing ridge 31, the second arc-shaped reinforcing ridge 32 and the third arc-shaped reinforcing ridge 33 along the buccolingual direction. A section of a second reinforcing part formed by the fourth arc-shaped reinforcing ridge 41, the fifth arc-shaped reinforcing ridge 42 and the sixth arc-shaped reinforcing ridge 43 along the mesial-distal direction is a discontinuous section, and a shape of the discontinuous section is a semi-closed ring. The fourth arc-shaped reinforcing ridge 41, the fifth arc-shaped reinforcing ridge 42 and the sixth arc-shaped reinforcing ridge 43 are all provided below the cross section of the first upper palatal arch 12 and are all reinforcing ridges provided on one side, convex directions of which are from the palatal side to the lingual side.

Referring to FIG. 3 and FIG. 4c, an arrangement of continuous reinforcing ridges 44 along the buccolingual direction is basically the same as that of any one of the first arc-shaped reinforcing ridge 31, the second arc-shaped reinforcing ridge 32, and the third arc-shaped reinforcing ridge 33 along the buccolingual direction. A section of the continuous reinforcing ridge 44 along the mesial-distal direction is a continuous section, and a shape of the continuous section is a wave shape. The continuous reinforcing ridge 44 is a reinforcing ridge continuously provided above and below the cross section of the first upper palatal arch 12.

Referring to FIG. 3 and FIG. 4a, after the user wears the second dental orthodontic appliance 3, the first shell-like body 11 acts on the user's teeth, so that the two ends of the first upper palatal arch 12 are respectively subjected to a force F in opposite directions. A vertical distance from any point on the surface of the first upper palatal arch 12 to a force bearing point is H. Since the vertical distance H from any point on the surface of the first upper palatal arch 12 to the force bearing point is different, a moment M borne by each point is also different. Specifically, since $M = F \times H$, as the vertical distance H from any point on the first upper palatal arch 12 to the force bearing point increases, M increases linearly.

In order to ensure that a maximum stress on the cross section of the first upper palatal arch 12 is equal or similar, a flexural strength of the first upper palatal arch 12 is maximized, and a utilization rate of materials is also maximized. Referring to FIG. 4a, a vertical distance from a point where each reinforcing ridge is farthest from a connection between the first upper palatal arch 12 and the first shell-like body 11 to the cross section of the first upper palatal arch 12 is defined as a ridge height. The moment M on any section of the first arc-shaped reinforcing ridge 31, the second arc-shaped reinforcing ridge 32 and the third arc-shaped reinforcing ridge 33 is proportional to a flexural section factor W. Specifically, a constant $\sigma$ is M/W, and the flexural section factor

$$W = F \times h/\sigma$$

. For a rectangle with a height h and a width b, the flexural section factor $W = b \times h^2/6$ to ensure that square of the height of different sections increases linearly, so as to ensure equal stress. Thus, the rigidity of the first upper palatal arch 12 may be fully utilized.

In an embodiment of the present disclosure, when the user wears the second dental orthodontic appliance 3, a curvature of any one of the first arc-shaped reinforcing ridge 31, the second arc-shaped reinforcing ridge 32 and the third arc-shaped reinforcing ridge 33 is the same as or different from a corresponding curvature of the upper palate of the user.

In an embodiment of the present disclosure, the first arc-shaped reinforcing ridge 31, the second arc-shaped reinforcing ridge 32 and the third arc-shaped reinforcing ridge 33 are all provided on the palatal surface 122 of the first upper palatal arch 12. Any one of the first arc-shaped reinforcing ridge 31, the second arc-shaped reinforcing ridge 32 and the third arc-shaped reinforcing ridge 33 is not in contact with the palate of the user, so as to avoid discomfort cause by contact when the patient wears the dental orthodontic appliance.

In an embodiment of the present disclosure, among the first arc-shaped reinforcing ridge 31, the second arc-shaped reinforcing ridge 32 and the third arc-shaped reinforcing ridge 33, a spacing between two adjacent arc-shaped reinforcing ridges along the mesial-distal direction is the same or different, that is, the reinforcing ridges may be uniformly provided on the upper palatal arch, or may be non-uniformly provided on the upper palatal arch.

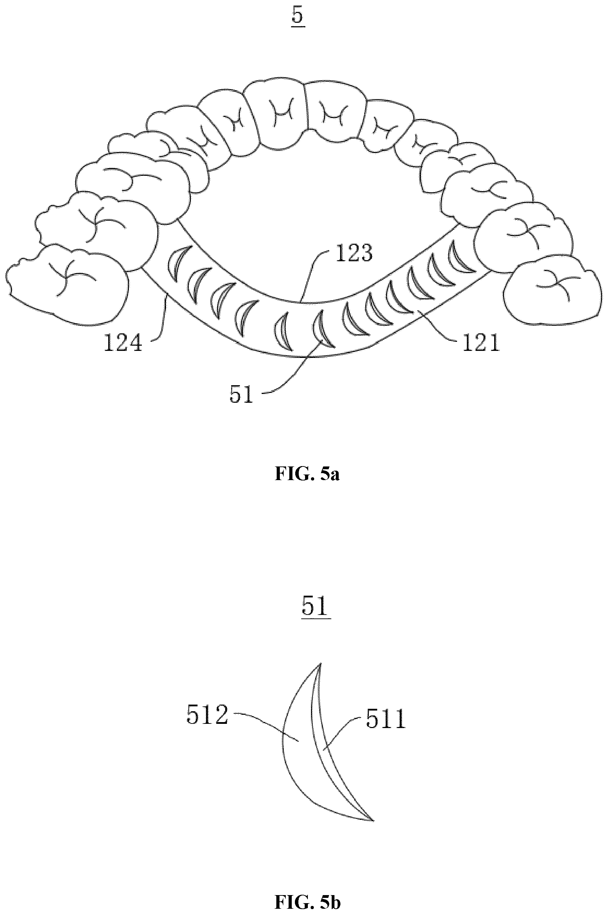

FIG. 5a is a schematic structural diagram of a third dental orthodontic appliance according to Embodiment 5 of the present disclosure. FIG. 5b is a schematic structural diagram of a crescent-like reinforcing ridge shown in FIG. 5a.

Referring to FIG. 5a, a main difference between a third dental orthodontic appliance 5 and the first dental orthodontic appliance 1 of Embodiment 1 is that: the lingual surface 121 of the first upper palatal arch 12 is provided with a plurality of crescent-like reinforcing ridges 51, to constitute a reinforcing part of the third dental orthodontic appliance 5.

The single crescent-like reinforcing ridge 51 points to any point on a second edge 124 of the upper palatal arch 12 along any point of a first edge 123 of the first upper palatal arch 12 and a surface of the first upper palatal arch 12 where the crescent-like reinforcing ridge 51 is located. An arrangement direction of the plurality of crescent-like reinforcing ridges 51 is a buccolingual direction.

Referring to FIG. 5a and FIG. 5b, the crescent-like reinforcing ridge 51 is formed by extending and intersecting an inner concave curved surface 511 and an outer convex curved surface 512. A section of the crescent-like reinforcing ridge 51 along the buccolingual direction is a discontinuous section, and a shape of the discontinuous section is a semi-closed triangle.

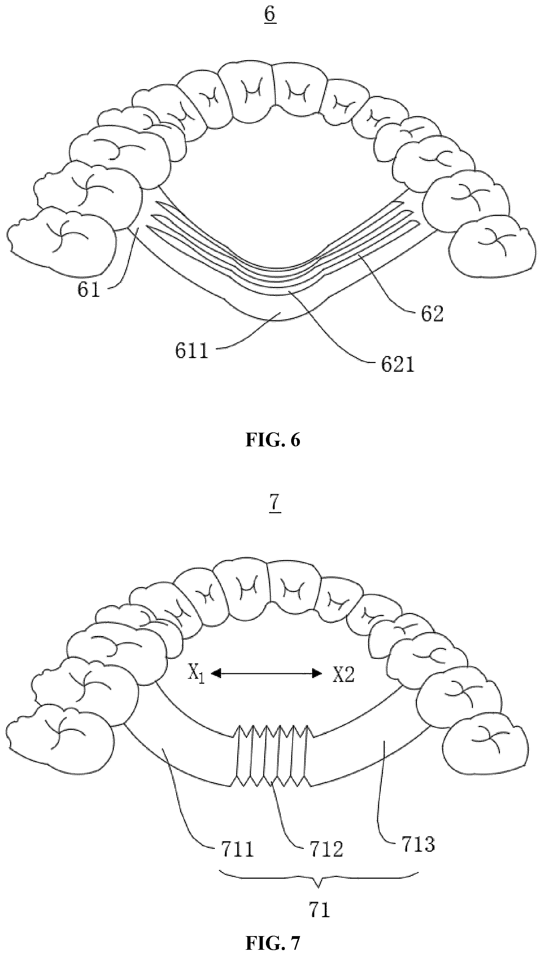

FIG. 6 is a schematic structural diagram of a fourth dental orthodontic appliance according to Embodiment 6 of the present disclosure.

Referring to FIG. 6, a fourth dental orthodontic appliance 6 has a second upper palatal arch 61. A main difference between the second upper palatal arch 61 and the first upper palatal arch 12 in Embodiment 2 is that: a middle part of the second upper palatal arch 61 has a curved arch 611 that further bends toward the palate, so that a bending degree of the second upper palatal arch 61 varies unevenly along an arrangement direction.

In addition, the second upper palatal arch 61 is provided with an irregular arc-shaped reinforcing ridge 62, and a difference between the irregular arc-shaped reinforcing ridge 62 and the third arc-shaped reinforcing ridge 33 is that: a middle part of the irregular arc-shaped reinforcing ridge 62 has a curved arc-shaped ridge 621 that further bends toward the palate to accommodate a bending degree of the curved arch 611.

In an embodiment of the present disclosure, the upper palatal arch is provided with an adjustment portion for adjusting expansion or contraction of the upper palatal arch. Specifically, the adjustment part is an elastic telescopic structure, which may be adjusted flexibly according to correction needs of the patient.

FIG. 7 is a schematic structural diagram of a fifth dental orthodontic appliance according to Embodiment 7 of the present disclosure.

Referring to FIG. 7, a main difference between a fifth dental orthodontic appliance 7 and the first dental orthodontic appliance 1 of Embodiment 1 is that: a third upper palatal arch 71 of the fifth dental orthodontic appliance 7 is composed of a first short arch 711, a first elastic telescopic structure 712 and a second short arch 713 connected in sequence, so that the third upper palatal arch 71 bends toward the palate of a user, and a telescopic direction of the first elastic telescopic structure 712 is a buccolingual direction, namely a X1X2 direction shown in FIG. 7.

In an embodiment of the present disclosure, the first elastic telescopic structure 712 is symmetrical along a dental midline.

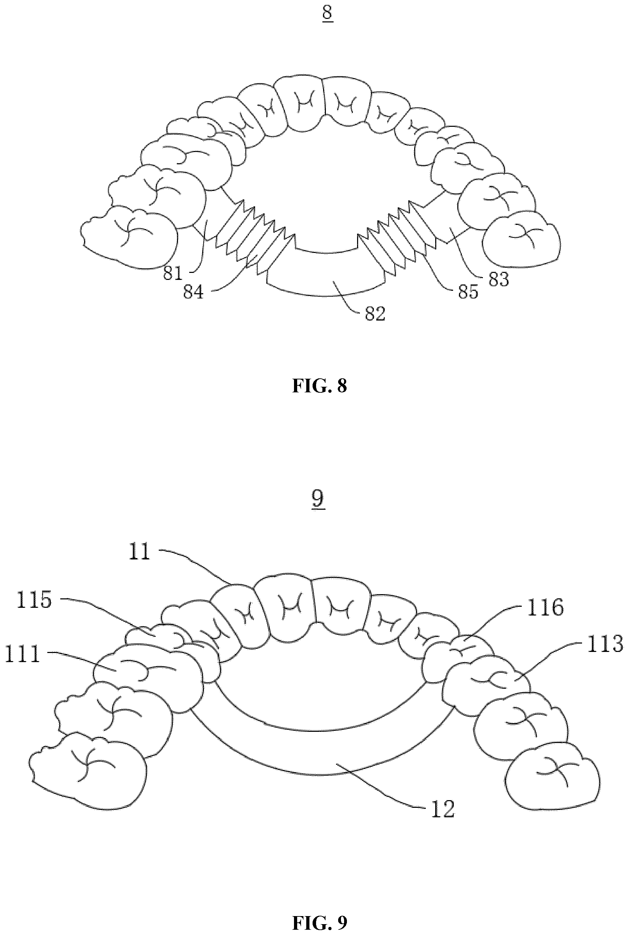

FIG. 8 is a schematic structural diagram of a sixth dental orthodontic appliance according to Embodiment 8 of the present disclosure.

Referring to FIG. 8, a main difference between a sixth dental orthodontic appliance 8 and the fifth dental orthodontic appliance 7 of Embodiment 7 is that: an upper palatal arch of the sixth dental orthodontic appliance 8 is divided into a third short arch 81, a fourth short arch 82 and a fifth short arch 83 by a second elastic telescopic structure 84 and a third elastic telescopic structure 85. Telescopic directions of the second elastic telescopic structure 84 and the third elastic telescopic structure 85 are both buccolingual directions.

In an embodiment of the present disclosure, the second elastic telescopic structure 84 and the third elastic telescopic structure 85 are symmetrical along a dental midline.

In an embodiment of the present disclosure, the upper palatal arch is provided with magnets that expand or contract in the buccolingual direction and have opposite magnetic properties. For arrangement of the magnets, reference may be made to the arrangement of the elastic telescopic structure in FIG. 7 and FIG. 8.

In an embodiment of the present disclosure, the elastic telescopic structure may also be an elastic body, such as a spring.

In an embodiment of the present disclosure, at least a part of the upper palatal arch is a multi-layer structure. A reinforcing archwire is provided between two adjacent layers of the multi-layer structure.

FIG. 9 is a schematic structural diagram of a seventh dental orthodontic appliance according to Embodiment 9 of the present disclosure.

Referring to FIG. 9, a main difference between a seventh dental orthodontic appliance 9 and the first dental orthodontic appliance 1 of Embodiment 1 is that: one end of the first upper palatal arch 12 is partially connected to positions of lingual gingival margins corresponding to a second premolar 111 and a first premolar 115 on a right side of a first shell-like body 11, and the other end is partially connected to positions of lingual gingival margins corresponding to a second premolar 113 and a first premolar on a left side of the first shell body 11.

An embodiment of the present disclosure further provides a dental appliance set. The dental appliance set includes a first shell-like dental appliance and a second shell-like dental appliance. The first shell-like dental appliance is the dental orthodontic appliance provided in the above-mentioned embodiment of the present disclosure, and its specific implementation form may be any one of the first dental orthodontic appliance 1 and the second dental orthodontic appliance 3, the third dental orthodontic appliance 5, the fourth dental orthodontic appliance 6, the fifth dental orthodontic appliance 7, the sixth dental orthodontic appliance 8 and the seventh dental orthodontic appliance 9 described above. A shell-like body of the second shell-like dental appliance is provided with a plurality of cavities for accommodating mandibular teeth.

An embodiment of the present disclosure further provides a dental orthodontic system, including a plurality of dental appliance sets. The plurality of dental appliance sets include at least one of the dental appliance sets described in the above embodiment of the present disclosure, and have a geometric shape that makes teeth gradually repositioned from an initial position to a target orthodontic position, so as to realize orthodontic treatment while adjusting a dental arch.

In an embodiment of the present disclosure, the dental orthodontic system includes a first dental appliance set applied in a first orthodontic stage and a second dental appliance set applied in a second orthodontic stage, and the second orthodontic stage is temporally after the first orthodontic stage.

Specifically, the shell-like body for accommodating the mandibular teeth in the second dental appliance set has a different geometric shape than the shell-like body for accommodating the mandibular teeth in the first dental appliance set, so that the mandibular teeth are gradually positioned to the target orthodontic position to be reached in the second orthodontic stage to achieve orthodontic effect.

The shell-like body for accommodating the maxillary teeth in the second dental appliance set has a different geometric shape than the shell-like body for accommodating the maxillary teeth in the first dental appliance set, so that the maxillary teeth are gradually positioned to the target orthodontic position to be reached in the second orthodontic stage. And the upper palatal arch connected by the shell-like body for accommodating the maxillary teeth in the second dental appliance set has a different curvature than the upper palatal arch connected by the shell-like body for accommodating the maxillary teeth in the first dental appliance set, the curvature of which is adjusted according to needs of orthodontic treatment.

Taking the first dental orthodontic appliance 1 shown in FIG. 1a as an example, when it is necessary to achieve effect of arch expansion through the first orthodontic stage and the second orthodontic stage, the curvature of the first upper palatal arch 12 of the first dental orthodontic appliance 1 used in the second orthodontic stage is greater than the curvature of the first upper palatal arch 12 used in the first orthodontic stage.

When effect of arch contraction needs to be achieved through the first orthodontic stage and the second orthodontic stage, the curvature of the first upper palatal arch 12 of the first dental orthodontic appliance 1 used in the second orthodontic stage is smaller than the curvature of the first upper palatal arch 12 used in the first orthodontic stage.

In an embodiment of the present disclosure, the upper palatal arch in the dental appliance set is further provided with a reinforcing part for enhancing expansion or contraction of the upper palatal arch. The reinforcing part is at least one reinforcing ridge provided on the upper palatal arch and consistent with or different from a curvature of the palate. As an orthodontic process goes on, a ridge height of the reinforcing ridge in different dental appliance sets gradually decreases. When the arch expansion or contraction reaches a certain degree, it is only necessary to maintain a state of a result of the arch expansion or contraction, so the ridge height of the reinforcing ridge may be adjusted according to needs of the orthodontic process.

For specific implementation form of the reinforcing ridge, reference may be made to the above description of the reinforcing part of any one of the second dental orthodontic appliance 3, the third dental orthodontic appliance 5 and the fourth dental orthodontic appliance 6, which will not be repeated herein.

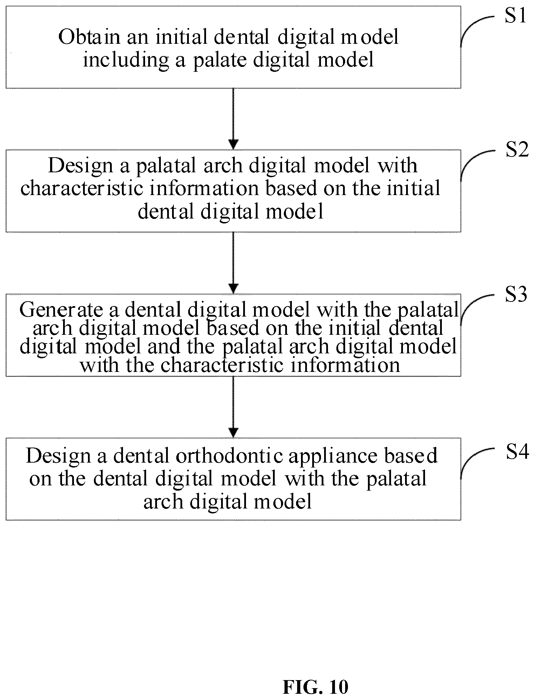

FIG. 10 shows a flowchart of a design method of the above-mentioned dental orthodontic appliance according to an embodiment of the present disclosure.

Referring to FIG. 10, the design method of the first dental orthodontic appliance includes the following steps:

S 1: obtaining an initial dental digital model including a palate digital model.
S2: designing an upper palatal arch digital model with characteristic information based on the initial dental digital model;
S3: generating a dental digital model with the upper palatal arch digital model based on the initial dental digital model and the upper palatal arch digital model with the characteristic information;
S4: designing the dental orthodontic appliance based on the dental digital model with the upper palatal arch digital model.

Herein, in the above step S1, the user is scanned intraorally, and a scanning range covers the palate and an upper dental arch of a user, so as to obtain the initial dental digital model including the palatal digital model.

In an embodiment of the present disclosure, a medical silicone material is used to take an intraoral impression of the user to obtain a physical impression model, and the physical impression model includes the palate impression and a maxillary impression. After the physical impression model is converted into a physical male-mould model, the physical male-mould model is scanned to obtain the initial dental digital model including the palatal digital model.

Herein, in the above step S2, the characteristic information includes size information and preset position information of the upper palatal arch digital model. The preset position information of the upper palatal arch is that two ends of the upper palatal arch are provided at positions of lingual gingival margins or positions adjacent to the lingual gingival margins in posterior regions of the initial dental digital model.

Specifically, the user's orthodontic needs are confirmed according to the palate digital model, the initial dental digital model corresponding to the palate digital model, and other necessary medical information of the user. Then, an orthodontic solution of at least one orthodontic cycle is formulated according to the orthodontic needs. The size information and preset position information of the upper palatal arch digital model are formulated based on orthodontic effect that needs to be achieved in a next orthodontic cycle.

The preset position information of the upper palatal arch is designed such that two ends of the upper palatal arch are provided at positions of lingual gingival margins or positions adjacent to the lingual gingival margins in posterior regions of the initial dental digital model. With this design, when the dental orthodontic appliance interacts with teeth, the upper palatal arch induces buccolingual lateral amplification of maxillary palatal suture bone deposition by means of deformation, and teeth in the posterior regions move laterally buccolingually under an action of the dental orthodontic appliance. The upper palatal arch may amplify or reduce the buccolingual distance of the teeth in the posterior regions to achieve effect of arch contraction or expansion.

Herein, in the above step S3, the dental digital model with the upper palatal arch digital model is generated based on the initial dental digital model and the upper palatal arch digital model with the characteristic information, so that the dental digital model has the upper palatal arch digital model, which provides a model basis for subsequent design of the dental orthodontic appliance.

Herein, in the above step S4, the dental orthodontic appliance designed based on the dental digital model with the upper palatal arch digital model includes a shell-like body with cavities for accommodating maxillary teeth, and an upper palatal arch connected to positions of lingual gingival margins or positions adjacent to the gingival margins of the posterior regions on left and right sides of the dental orthodontic appliance.

In addition, an embodiment of the present disclosure also provides a manufacturing method of the above-mentioned dental orthodontic appliance. The manufacturing method is to manufacture a dental orthodontic appliance designed based on the design method of the dental orthodontic appliance, and the manufacturing method includes thermoforming or direct 3D printing.

Although the embodiments of the present disclosure have been described above in detail, it is apparent to those skilled in the art that various modifications and changes can be made to these embodiments. However, it should be understood that such modifications and changes are within the scope of the present disclosure as set forth in the claims.

**Claims**

1. A dental orthodontic appliance, comprising a shell-like body (11) provided with a plurality of cavities for accommodating maxillary teeth, wherein:

   the shell-like body (11) is further provided with an upper palatal arch (12) to reshape a form of a dental arch, and two ends of the upper palatal arch (12) are respectively and partially connected to positions of gingival margins or positions adjacent to the gingival margins on ligual sides in posterior regions of on left and right sides of the shell-like body (11);

   when the shell-like body (11) interacts with teeth, the upper palatal arch (12) induces buccolingual lateral amplification of maxillary palatal suture bone deposition by means of deformation, and teeth in the posterior regions move laterally buccolingually under an action of the shell-like body (11);

   the upper palatal arch (12) is further provided with a reinforcing part for enhancing expansion or contraction of the upper palatal arch; optionally, the reinforcing part is at least one reinforcing ridge provided on the upper palatal arch and consistent with a curvature of the palate; and a ridge height of the reinforcing ridge is proportional to a flexural section factor.

2. The dental orthodontic appliance according to claim 1, wherein a lingual spacing between the posterior regions on the left and right sides of the shell-like body is different from a lingual spacing between teeth corresponding to the posterior regions on the left and right sides.

3. The dental orthodontic appliance according to claim 1, wherein a section of the reinforcing ridge along a mesial-distal direction of a sagittal plane is a discontinuous section or a continuous section.

4. The dental orthodontic appliance according to claim 1, wherein a section of a cross section of the reinforcing ridge in the mesial-distal direction is provided above and below a cross section of the upper palatal arch, is provided above the cross section of the upper palatal arch (12), or is provided below the cross section of the upper palatal arch.

5. The dental orthodontic appliance according to claim 4, wherein the section of the cross section of the reinforcing ridge in the mesial-distal direction is an arc or a semi-closed polygon.

6. The dental orthodontic appliance according to claim 1, wherein a rigidity of the upper palatal arch is greater than a rigidity of an area of the shell-like body for accommodating the maxillary teeth; and/or, the upper palatal arch and the shell-like body are different in at least one of thickness, hardness, material and number of layers.

7. The dental orthodontic appliance according to claim 1, wherein at least a part of the upper palatal arch is a multi-layer structure; optionally, a reinforcing archwire is provided between two adjacent layers of the multi-layer structure.

8. The dental orthodontic appliance according to claim 1, wherein the upper palatal arch comprises a palatal surface and a lingual surface, and a distance between the palatal surface and the palate is 1-2 mm.

9. The dental orthodontic appliance according to claim 1, wherein the upper palatal arch and the shell-like body (11) are formed into an integrated structure.

10. A design method of the dental orthodontic appliance according to any one of claims 1 to 9, comprising:

obtaining an initial dental digital model, wherein the initial dental digital model comprises a palate digital model;
designing an upper palatal arch digital model with characteristic information based on the initial dental digital model, wherein the characteristic information comprises size information and preset position information of the upper palatal arch digital model, and the preset position information of the upper palatal arch is that two ends of the upper palatal arch are provided at positions of lingual gingival margins or positions adjacent to the lingual gingival margins of posterior regions of the initial dental digital model;
generating a dental digital model with the upper palatal arch digital model based on the initial dental digital model and the upper palatal arch digital model with the characteristic information;
designing the dental orthodontic appliance based on the dental digital model with the upper palatal arch digital model, so that the dental orthodontic appliance comprises a shell-like body (11) with a plurality of cavities for accommodating maxillary teeth, and an upper palatal arch connected to positions of lingual gingival margins or positions adjacent to the gingival margins of posterior regions on left and right sides of the dental orthodontic appliance;
when the shell-like body (11) interacts with teeth, the upper palatal arch induces buccolingual lateral amplification of maxillary palatal suture bone deposition by means of deformation, and teeth in the posterior regions move laterally buccolingually under an action of the shell-like body (11).

11. A manufacturing method of a dental orthodontic appliance, wherein the manufacturing method is to manufacture the dental orthodontic appliance based on the design method of the dental orthodontic appliance according to claim 10, and the manufacturing method comprises thermoforming or direct 3D printing.

**Patentansprüche**

1. Kieferorthopädische Vorrichtung, die einen schalenähnlichen Körper (11) umfasst, der mit einer Vielzahl von Hohlräumen zum Aufnehmen von Oberkieferzähnen versehen ist, wobei:

der schalenähnliche Körper (11) ferner mit einem oberen Gaumenbogen (12) zum Umformen einer Form eines Zahnbogens versehen ist und zwei Enden des oberen Gaumenbogens (12) jeweils und teilweise mit Positionen von Zahnfleischrändern oder Positionen benachbart zu den Zahnfleischrändern auf lingualen Seiten in hinteren Regionen auf der linken und der rechten Seite des schalenähnlichen Körpers (11) verbunden sind;
wobei der schalenähnliche Körper (11) mit Zähnen interagiert, der obere Gaumenbogen (12) seitliche bukkolinguale Verstärkung von Oberkiefergaumen-Nahtknochenablagerung mittels Verformung herbeiführt und Zähne in den hinteren Regionen sich unter einer Wirkung des schalenähnlichen Körpers (11) seitlich bukkolingual bewegen;
der obere Gaumenbogen (12) ferner mit einem Verstärkungsteil zum Verbessern der Ausdehnung oder des Zusammenziehens des oberen Gaumenbogens versehen ist; wobei der Verstärkungsteil wahlweise mindestens ein Verstärkungsgrat ist, der auf dem oberen Gaumenbogen und übereinstimmend mit einer Krümmung des Gaumens bereitgestellt ist; und
eine Grathöhe des Verstärkungsgrats proportional zu einem Biegewiderstandsfaktor ist.

2. Kieferorthopädische Vorrichtung nach Anspruch 1, wobei ein lingualer Zwischenraum zwischen den hinteren Regionen auf der linken und der rechten Seite des schalenähnlichen Körpers sich von einem lingualen Zwischenraum zwischen Zähnen unterscheidet, die den hinteren Regionen auf der linken und der rechten Seite entsprechen.

3. Kieferorthopädische Vorrichtung nach Anspruch 1, wobei eine Sektion des Verstärkungsgrates entlang einer mesial-distalen Richtung einer Sagittalebene eine unterbrochene Sektion oder eine ununterbrochene Sektion ist.

4. Kieferorthopädische Vorrichtung nach Anspruch 1, wobei eine Sektion eines Querschnitts des Verstärkungsgrates in der mesial-distalen Richtung über und unter einem Querschnitt des oberen Gaumenbogens bereitgestellt ist, über dem Querschnitt des oberen Gaumenbogens (12) bereitgestellt ist oder unter dem Querschnitt des oberen Gaumenbogens bereitgestellt ist.

**5.** Kieferorthopädische Vorrichtung nach Anspruch 4, wobei die Sektion des Querschnitts des Verstärkungsgrats in der mesial-distalen Richtung ein Bogen oder ein halbgeschlossenes Vieleck ist.

**6.** Kieferorthopädische Vorrichtung nach Anspruch 1, wobei eine Steifigkeit des oberen Gaumenbogens höher als eine Steifigkeit eines Bereichs des schalenähnlichen Körpers zum Aufnehmen der Oberkieferzähne ist; und/oder der obere Gaumenbogen und der schalenähnliche Körper sich in mindestens einem von Dicke, Härte, Material und Anzahl von Schichten unterscheiden.

**7.** Kieferorthopädische Vorrichtung nach Anspruch 1, wobei zumindest ein Teil des oberen Gaumenbogens eine mehrschichtige Struktur ist; wahlweise ein Verstärkungsbogendraht zwischen zwei benachbarten Schichten der mehrschichtigen Struktur bereitgestellt ist.

**8.** Kieferorthopädische Vorrichtung nach Anspruch 1, wobei der obere Gaumenbogen eine Gaumenoberfläche und eine linguale Oberfläche umfasst und ein Abstand zwischen der Gaumenoberfläche und dem Gaumen 1 bis 2 mm beträgt.

**9.** Kieferorthopädische Vorrichtung nach Anspruch 1, wobei der obere Gaumenbogen und der schalenähnliche Körper (11) in eine integrierte Struktur gebildet sind.

**10.** Entwurfsverfahren für eine kieferorthopädische Vorrichtung nach einem der Ansprüche 1 bis 9, umfassend:

Erhalten eines anfänglichen digitalen Zahnmodells, wobei das anfängliche digitale Zahnmodell ein digitales Gaumenmodell umfasst; Entwerfen eines digitalen Modells des oberen Gaumenbogens mit charakteristischen Informationen basierend auf dem anfänglichen digitalen Zahnmodell, wobei die charakteristischen Informationen Größeninformationen und voreingestellte Positionsinformationen des digitalen Modells des oberen Gaumenbogens umfassen und die voreingestellten Positionsinformationen des oberen Gaumenbogens darin bestehen, dass zwei Enden des oberen Gaumenbogens an Positionen von lingualen Zahnfleischrändern oder Positionen benachbart zu den lingualen Zahnfleischrändern von hinteren Regionen des anfänglichen digitalen Zahnmodells bereitgestellt sind; Erzeugen eines digitalen Zahnmodells mit dem digitalen Modell des oberen Gaumenbogens basierend auf dem anfänglichen digitalen Zahnmodell und dem digitalen Modell des oberen Gaumenbogens mit den charakteristischen Informationen; Entwerfen der kieferorthopädischen Vorrichtung basierend auf dem digitalen Zahnmodell mit dem digitalen Modell des oberen Gaumenbogens, derart dass die kieferorthopädische Vorrichtung einen schalenähnlichen Körper (11) mit einer Vielzahl von Hohlräumen zum Aufnehmen von Oberkieferzähnen und einen oberen Gaumenbogen umfasst, der mit Positionen von lingualen Zahnfleischrändern oder Positionen benachbart zu den Zahnfleischrändern von hinteren Regionen auf der linken und der rechten Seite der kieferorthopädischen Vorrichtung verbunden ist; wenn der schalenförmige Körper (11) mit Zähnen interagiert, der obere Gaumenbogen seitliche bukkolinguale Verstärkung von Oberkiefergaumen-Nahtknochenablagerung mittels Verformung herbeiführt und Zähne in den hinteren Regionen sich unter einer Wirkung des schalenähnlichen Körpers (11) seitlich bukkolingual bewegen.

**11.** Herstellungsverfahren einer kieferorthopädischen Vorrichtung, wobei das Herstellungsverfahren zum Herstellen der kieferorthopädischen Vorrichtung basierend auf dem Entwurfsverfahren der kieferorthopädischen Vorrichtung nach Anspruch 10 ist und das Herstellungsverfahren das Thermoformen oder direkte 3D-Drucken umfasst.

### Revendications

**1.** Appareil orthodontique dentaire comprenant un corps en forme de coque (11) prévu avec une pluralité de cavités pour loger les dents maxillaires, dans lequel :

le corps en forme de coque (11) est en outre prévu avec une voûte palatine supérieure (12) pour reformer une forme d'une arcade dentaire, et deux extrémités de la voûte palatine supérieure (12) sont respectivement et partiellement raccordées aux positions des marges gingivales ou aux positions adjacentes aux marges gingivales sur les faces linguales dans les régions postérieures des côtés gauche et droit du corps en forme de coque (11) ; lorsque le corps en forme de coque (11) interagit avec les dents, la voûte palatine supérieure (12) induit une amplification latérale bucco-linguale du dépôt osseux de suture palatine maxillaire au moyen de déformation, et les dents dans les régions postérieures se déplacent latéralement du point de vue bucco-lingual sous une action du corps en forme de coque (11) ;

la voûte palatine supérieure (12) est en outre prévue avec une partie de renforcement pour améliorer la dilatation ou la contraction de la voûte palatine supérieure ; facultativement, la partie de renforcement est au moins une crête de renforcement prévue sur la voûte palatine supérieure et compatible avec une courbure du palais ; et
une hauteur de crête de la crête de renforcement est proportionnelle à un facteur de section de flexion.

2. Appareil orthodontique dentaire selon la revendication 1, dans lequel un espacement lingual entre les régions postérieures sur les côtés gauche et droit du corps en forme de coque est différent d'un espacement lingual entre les dents correspondant aux régions postérieures sur les côtés gauche et droit.

3. Appareil orthodontique dentaire selon la revendication 1, dans lequel une section de la crête de renforcement le long d'une direction mésio-distale d'un plan sagittal est une section discontinue ou une section continue.

4. Appareil orthodontique dentaire selon la revendication 1, dans lequel une section d'une section transversale de la crête de renforcement dans la direction mésio-distale est prévue au-dessus et au-dessous d'une section transversale de la voûte palatine supérieure, est prévue au-dessus de la section transversale de la voûte palatine supérieure (12) ou est prévue au-dessous de la section transversale de la voûte palatine supérieure.

5. Appareil orthodontique dentaire selon la revendication 4, dans lequel la section de la section transversale de la crête de renforcement dans la direction mésio-distale est un arc ou un polygone semi-fermé.

6. Appareil orthodontique dentaire selon la revendication 1, dans lequel une rigidité de la voûte palatine supérieure est supérieure à une rigidité d'une zone du corps en forme de coque pour loger les dents maxillaires ; et/ou la voûte palatine supérieure et le corps en forme de coque sont différents selon au moins l'un parmi l'épaisseur, la dureté, le matériau et le nombre de couches.

7. Appareil orthodontique dentaire selon la revendication 1, dans lequel au moins une partie de la voûte palatine supérieure est une structure à plusieurs couches ; facultativement un fil dentaire de renforcement est prévu entre deux couches adjacentes de la structure à plusieurs couches.

8. Appareil orthodontique dentaire selon la revendication 1, dans lequel la voûte palatine supérieure comprend une surface palatine et une surface linguale, et une distance entre la surface palatine et le palais est de 1 à 2 mm.

9. Appareil orthodontique dentaire selon la revendication 1, dans lequel la voûte palatine supérieure et le corps en forme de coque (11) sont formés dans une structure intégrée.

10. Procédé de conception de l'appareil orthodontique dentaire selon l'une quelconque des revendications 1 à 9, comprenant les étapes consistant à :

obtenir un modèle numérique dentaire initial, dans lequel le modèle numérique dentaire initial comprend un modèle numérique de palais ;
concevoir un modèle numérique de voûte palatine supérieure avec des informations caractéristiques sur la base du modèle numérique dentaire initial, dans lequel les informations caractéristiques comprennent l'information de taille et l'information de position prédéterminée du modèle numérique de voûte palatine supérieure, et l'information de position prédéterminée de la voûte palatine réside dans le fait que deux extrémités de la voûte palatine supérieure sont prévues dans les positions de marges gingivo-linguales ou les positions adjacentes aux marges gingivo-linguales des régions postérieures du modèle numérique dentaire initial ;
générer un modèle numérique dentaire avec le modèle numérique de voûte palatine supérieure sur la base du modèle numérique dentaire initial et du modèle numérique de voûte palatine supérieure avec les informations caractéristiques ;
concevoir l'appareil orthodontique dentaire sur la base du modèle numérique dentaire avec le modèle numérique de voûte palatine supérieure, de sorte que l'appareil orthodontique dentaire comprend un corps en forme de coque (11) avec une pluralité de cavités pour loger des dents maxillaires, et une voûte palatine supérieure raccordée aux positions des marges gingivo-linguales ou aux positions adjacentes aux marges gingivales des régions postérieures sur les côtés gauche et droit de l'appareil orthodontique dentaire ;
lorsque le corps en forme de coque (11) interagit avec les dents, la voûte palatine supérieure induit l'amplification latérale bucco-linguale du dépôt osseux de suture palatine maxillaire au moyen de déformation, et les dents dans les régions postérieures se déplacent latéralement du point de vue bucco-lingual sous une action du corps en forme de coque (11).

11. Procédé de fabrication d'un appareil orthodontique dentaire, dans lequel le procédé de fabrication consiste à fabriquer l'appareil orthodontique dentaire sur la base du procédé de conception de l'appareil orthodontique dentaire selon la revendication 10 et le procédé de fabrication comprend l'étape de thermoformage ou d'impression directe en 3D.

<u>1</u>

**FIG. 1a**

**FIG. 1b**

**FIG. 2**

**FIG. 3**

FIG. 4a

FIG. 4b

FIG. 4c

<u>5</u>

**FIG. 5a**

<u>51</u>

**FIG. 5b**

<u>6</u>

**FIG. 6**

<u>7</u>

**FIG. 7**

<u>8</u>

FIG. 8

<u>9</u>

FIG. 9

Obtain an initial dental digital model
including a palate digital model — S1

Design a palatal arch digital model with
characteristic information based on the initial
dental digital model — S2

Generate a dental digital model with the palatal
arch digital model based on the initial dental
digital model and the palatal arch digital model
with the characteristic information — S3

Design a dental orthodontic appliance based
on the dental digital model with the palatal
arch digital model — S4

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019069163 A1

**Non-patent literature cited in the description**

- Introduction of Stomatology. Peking University Medical Press, 36-38